(19) Europäisches Patentamt
European Patent Office
Office européen des brevets

(11) **EP 2 156 548 B1**

(12) **FASCICULE DE BREVET EUROPEEN**

(45) Date de publication et mention
de la délivrance du brevet:
**17.08.2016 Bulletin 2016/33**

(51) Int Cl.:
***H02P 25/032*** *(2016.01)*    ***H02K 33/10*** *(2006.01)*

(21) Numéro de dépôt: **08805547.0**

(22) Date de dépôt: **07.05.2008**

(86) Numéro de dépôt international:
**PCT/FR2008/000641**

(87) Numéro de publication internationale:
**WO 2008/152236 (18.12.2008 Gazette 2008/51)**

(54) **ACTIONNEUR ALTERNATIF A ASSERVISSEMENT EN BOUCLE FERMÉE**

KOLBENBETÄTIGER MIT GESCHLOSSENER SERVOSTEUERUNG

RECIPROCATING ACTUATOR WITH CLOSED LOOP SERVOCONTROL

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **11.05.2007 FR 0703380**

(43) Date de publication de la demande:
**24.02.2010 Bulletin 2010/08**

(73) Titulaires:
• **Centre National d'Etudes Spatiales (C.N.E.S.)**
**75039 Paris Cedex 01 (FR)**
• **CONCEPTION DE SYSTEMES ET TECHNOLOGIE MECANIQUE:**
**C.S.T.M.**
**31320 Castanet Tolosan (FR)**
• **ECOLE SUPERIEURE D'ELECTRICITE SUPELEC**
**91192 GIF-SUR-YVETTE (FR)**

(72) Inventeurs:
• **VANNIER, Jean-Claude**
**92240 Malakoff (FR)**
• **ARZANDE, Amir**
**91940 Les Ulis (FR)**
• **JEANBLANC, Gérard**
**92310 Sevres (FR)**
• **GIBEK, Isabelle**
**31240 l'Union (FR)**
• **SCHWANDER, Denis**
**31860 Labarthe Sur Leze (FR)**
• **DUGUÉ, François**
**31450 Pompertuzat (FR)**
• **ROUX, François**
**31590 Gauré (FR)**

(74) Mandataire: **Cabinet BARRE LAFORGUE & associés**
**35, rue Lancefoc**
**31000 Toulouse (FR)**

(56) Documents cités:
**EP-A- 1 250 526     JP-A- 8 201 402**
**JP-A- 9 282 005     JP-A- 9 282 006**
**US-A- 3 848 411     US-A- 5 161 083**
**US-A- 6 043 616**

**Description**

L'invention concerne un actionneur alternatif comprenant un bâti, au moins un équipage mobile guidé par rapport au bâti de façon à pouvoir se déplacer selon des mouvements alternatifs par rapport à ce bâti, un dispositif d'entraînement de l'équipage mobile dans un sens, dit sens d'entraînement, des moyens de rappel de l'équipage mobile dans un sens opposé au sens d'entraînement, au moins un capteur de détection de la position de l'équipage mobile par rapport au bâti aptes à délivrer un signal de position représentatif au moins de la position de cet équipage mobile au voisinage de sa position extrême de fin de course de déplacement dans le sens d'entraînement, et un asservissement adapté pour délivrer un signal de commande du dispositif d'entraînement, dont la valeur est déterminée pour chaque cycle de déplacement de l'équipage mobile dans le sens d'entraînement, en fonction de la différence entre une position extrême prise précédemment par l'équipage mobile dans le sens d'entraînement telle que déterminée par le signal de position et une position extrême limite de consigne prédéterminée de l'équipage mobile dans son déplacement dans le sens d'entraînement, ce signal de commande étant adapté pour pouvoir interrompre le dispositif d'entraînement avant que l'équipage mobile n'arrive en position de fin de course dans le sens d'entraînement.

EP-A-1250526 décrit une électropompe comprenant un tel actionneur alternatif de type à réluctance variable. Cet actionneur donne entière satisfaction. Diverses solutions ont été envisagées pour la réalisation de l'asservissement de cet actionneur en boucle fermée. Néanmoins, toutes les solutions envisagées présentent un certain nombre d'inconvénients. En particulier, aucune solution proposée est à la fois simple, rapide, fiable, précise, et compatible avec une utilisation dans tout type d'environnement, y compris dans un environnement spatial.

Ainsi, un asservissement fondé sur l'utilisation d'un microcalculateur réalisant un ajustement instantané en temps réel de la force d'entraînement impartie à l'équipage mobile en fonction de sa position détectée peut présenter une bonne fiabilité et une bonne précision, mais n'est pas compatible avec une exploitation en environnement spatial, dans la mesure où les circuits numériques formant ces microcalculateurs sont particulièrement sensibles aux rayonnements spatiaux.

Par ailleurs, un contrôle de position réalisé par des composants analogiques et compatibles avec un environnement spatial ne procurerait pas une rapidité, une précision et une fiabilité suffisantes pour obtenir un réel contrôle précis du fonctionnement de l'actionneur, certaines vibrations ou irrégularités de l'amplitude de déplacement pouvant être générées de façon intempestive dans certaines gammes de fonctionnement, en particulier à haute fréquence (notamment supérieure à 10 Hz) et/ou pour des faibles déplacements. En outre, un tel contrôle de position ne permettrait pas d'éviter les dépassements intempestifs de la position de consigne (pouvant entraîner des chocs violents dans le cas d'un actionneur électromagnétique à réluctance variable) dans certaines conditions particulières, notamment au démarrage ou en cas de blocage.

Il est à noter à cet égard que ces problèmes se posent avec d'autant plus d'acuité dans le cas d'un actionneur électromagnétique à réluctance variable pour lequel la force d'entraînement est proportionnelle, en première approximation, à l'inverse du carré de l'entrefer. En conséquence, si la force d'entraînement n'est pas interrompue suffisamment tôt au cours du cycle, l'armature mobile de l'actionneur, soumise à une force de valeur très importante, vient heurter violemment l'armature fixe.

L'invention vise à pallier ces inconvénients en proposant un asservissement pour un actionneur alternatif, notamment du type électromagnétique à réluctance variable, qui simultanément soit suffisamment rapide, fiable, précis, présentant une large gamme de fonctionnement, y compris à fréquence relativement élevée, notamment pouvant être supérieure à 100 Hz, et pour des faibles amplitudes de déplacement, pouvant être typiquement de l'ordre de quelques dixièmes de millimètre à quelques millimètres et, par ailleurs, puisse être réalisé avec des composants analogiques à haute fiabilité, en particulier compatible avec l'utilisation de l'actionneur dans un environnement spatial.

Pour ce faire, l'invention concerne un actionneur alternatif comprenant :

- un bâti,
- au moins un équipage mobile guidé par rapport au bâti de façon à pouvoir se déplacer selon des mouvements alternatifs par rapport à ce bâti,
- un dispositif d'entraînement de l'équipage mobile dans au moins un sens, dit sens d'entraînement,
- des moyens de rappel de l'équipage mobile dans un sens opposé au sens d'entraînement,
- au moins un capteur de détection de la position de l'équipage mobile par rapport au bâti apte à délivrer un signal de position représentatif au moins de la position de cet équipage mobile au voisinage de sa position extrême de fin de course de déplacement dans le sens d'entraînement,
- un asservissement adapté pour ajuster et délivrer, à chaque cycle de déplacement de l'équipage mobile dans le sens d'entraînement, un signal de commande du dispositif d'entraînement, dont la valeur est déterminée pour chaque cycle, en fonction de la différence entre une position extrême prise précédemment par l'équipage mobile dans le sens d'entraînement telle que déterminée par le signal de position et une position extrême limite de consigne prédéterminée de l'équipage mobile dans son déplacement dans le sens d'entraînement,

caractérisé en ce que l'asservissement :

- comprend au moins une chaîne de mesure adaptée pour délivrer pour chaque cycle de déplacement de l'équipage mobile dans le sens d'entraînement, au moins un signal, dit signal de correction, représentatif de la différence entre l'énergie impartie à l'équipage mobile par le dispositif d'entraînement au cours d'au moins un cycle précédant celui auquel le signal de commande est appliqué, et l'énergie, dite énergie nominale, à impartir à cet équipage mobile pour le déplacer exactement jusqu'à sa position extrême de consigne, le signal de correction étant représentatif d'une différence entre une première valeur proportionnelle à une durée pendant laquelle l'équipage mobile dépasse, dans le sens d'entraînement, une première référence de position sans dépasser une deuxième référence de position située à l'aval de la première référence de position dans le sens d'entraînement, et une deuxième valeur proportionnelle à une durée pendant laquelle l'équipage mobile dépasse, dans le sens d'entraînement, ladite deuxième référence de position,
- est adapté pour ajuster à chaque cycle le signal de commande en fonction dudit signal de correction,
- et est adapté pour délivrer un signal de commande, ce signal de commande interrompant le dispositif d'entraînement avant que l'équipage mobile n'arrive en position de fin de course dans le sens d'entraînement.

Le signal de correction est représentatif de l'insuffisance ou du surplus d'énergie impartie à l'équipage mobile lors d'au moins un cycle précédent, et cette différence d'énergie permet de calibrer l'entraînement de cet équipage mobile lors d'un cycle subséquent. Chaque cycle comprend au moins un déplacement de l'équipage mobile dans le sens d'entraînement, suivi d'un déplacement de l'équipage mobile dans le sens opposé au sens d'entraînement, chaque inversion du sens de déplacement s'effectuant pour chaque cycle au moins au-delà de positions de références identiques pour tous les cycles mais distantes en fonction du sens de déplacement considéré. Plusieurs variantes de réalisation sont possibles, en particulier selon la dynamique recherchée pour l'asservissement. Ainsi, le signal de correction peut prendre en compte une telle différence de l'énergie sur plusieurs cycles successifs, par exemple en réalisant une moyenne de cette différence d'énergie sur plusieurs cycles, pour calibrer le signal de commande d'un cycle subséquent.

Néanmoins, avantageusement, dans un actionneur selon l'invention, le signal de correction est représentatif au moins de la différence entre l'énergie impartie à l'équipage mobile par le dispositif d'entraînement au cours du cycle de déplacement précédant immédiatement celui auquel le signal de commande est appliqué, et l'énergie nominale. De préférence, le signal de correction est représentatif uniquement de la différence entre l'énergie impartie à l'équipage mobile par le dispositif d'entraînement au cours du cycle de déplacement précédant immédiatement celui auquel le signal de commande est appliqué, et l'énergie nominale.

Les inventeurs ont en effet constaté que la simple mesure d'une différence, à des coefficients multiplicatifs près, de durées de dépassement de deux références de position de l'équipage mobile permet en pratique de représenter de façon extrêmement simple la valeur du produit entre le décalage de position de l'équipage mobile par rapport à sa position de consigne par la force de rappel, qui, en première approximation, peut être considérée comme constante sur l'intervalle de temps de la mesure. Un tel mode de réalisation est particulièrement simple, peut être formé essentiellement, voire même exclusivement, de composés analogiques, mais est néanmoins très précis, y compris sur des gammes de fréquences relativement élevées, notamment de 0 à 300 Hz. Les coefficients multiplicatifs appliqués à chacune des durées sont des constantes qui sont de préférence prédéterminées en usine à la fabrication en fonction des caractéristiques dynamiques de l'actionneur, notamment du dispositif d'entraînement et des moyens de rappel. En variante ou en combinaison, un actionneur selon l'invention comprend avantageusement des moyens de réglage de ces coefficients multiplicatifs, permettant à l'utilisateur de modifier la sensibilité de réaction de l'asservissement.

De même, la première référence de position et/ou la deuxième référence de position et/ou la position extrême limite de consigne peuvent être prédéterminées à la fabrication en usine. En variante ou en combinaison, avantageusement et selon l'invention, l'asservissement comprend des moyens de réglage permettant de régler la valeur de la première référence de position et/ou de la deuxième référence de position.

Selon la dynamique de l'asservissement, les références de position peuvent être choisies plus ou moins proches l'une de l'autre, et plus ou moins proches de la position extrême de consigne. Néanmoins, de préférence, avantageusement et selon l'invention, la deuxième référence de position correspond à la position extrême limite de consigne.

L'invention s'applique non seulement à un actionneur dont au moins un équipage mobile est déplacé alternativement sans subir de choc, mais également à d'autres applications dans lesquelles au moins un équipage mobile peut venir percuter une pièce fixe du bâti, de façon à former un percuteur. Ainsi, avantageusement, dans un actionneur sur l'invention, lesdits moyens de réglage permettent de régler la deuxième référence de position au-delà de l'amplitude de déplacement possible de l'équipage mobile dans le sens d'entraînement, de sorte que ce dernier vient en butée contre une portée du bâti. Dans cette variante, la position extrême limite de consigne est située au-delà de ladite portée fixe du bâti et n'est donc en réalité en pratique jamais atteinte.

Par ailleurs, avantageusement, dans un actionneur selon l'invention, l'asservissement est tel qu'à chaque cycle, il n'autorise l'application du signal de commande du dispositif d'entraînement que lorsque l'armature mobile est à une distance plus importante de l'armature fixe qu'une position prédéterminée, dite référence de position principale, de l'armature mobile. De plus, avantageusement, dans un actionneur selon l'invention, à chaque cycle, l'asservissement limite la durée totale d'application du signal de commande à une durée inférieure à la durée pendant laquelle l'armature mobile est située au-delà de ladite référence de position principale. En outre, avantageusement, dans un actionneur selon l'invention, lesdits moyens de réglage permettent de régler ladite référence de position principale de sorte qu'elle corresponde à la position extrême d'entrefer maximum.

Par ailleurs, avantageusement et selon l'invention, le dispositif d'entraînement étant du type fournissant une énergie d'entraînement croissante avec la durée d'application d'un signal de commande électrique, l'asservissement est adapté pour ajuster le signal de commande, à partir du signal de correction, par modulation de largeur d'impulsions de ce signal de commande. Ainsi, dans cette variante particulièrement simple et avantageuse de l'invention, le signal de correction est utilisé par l'asservissement pour ajuster le rapport cyclique de la modulation de largeur d'impulsions du signal de commande.

En variante ou en combinaison, avantageusement et selon l'invention, l'asservissement comprend des moyens permettant de régler la durée totale d'application du signal de commande indépendamment du signal de correction -notamment pour effectuer un réglage initial de l'actionneur, la valeur de cette durée totale restant constante en fonctionnement-.

Dans un actionneur selon l'invention, le dispositif d'entraînement est associé à l'équipage mobile de façon à pouvoir entraîner ce dernier dans le sens d'entraînement, mais sans pouvoir limiter ni freiner les déplacements de l'équipage mobile, ni imposer sa position. Ainsi, le dispositif d'entraînement est de type unidirectionnel et impulsionnel (c'est-à-dire uniquement susceptible de fournir une quantité de mouvement à l'équipage mobile), et l'équipage mobile est guidé par rapport au bâti indépendamment du dispositif d'entraînement, de sorte que l'équipage mobile poursuit sa course lorsque le dispositif d'entraînement est interrompu.

Le dispositif d'entraînement d'un actionneur selon l'invention peut être de différentes natures. Dans le cas où le dispositif d'entraînement est de type électromagnétique, le réglage de la durée totale d'application du signal de commande permet d'obtenir un premier réglage grossier de l'énergie d'entraînement fournie à l'équipage mobile à chaque cycle (ce réglage étant réalisé par configuration initiale par l'utilisateur), tandis que l'asservissement ajuste à chaque cycle, à partir du signal de correction, le signal de commande par modulation de largeur d'impulsions, réalisant ainsi un réglage fin de cette énergie impartie à l'équipage mobile. Ce mode de réalisation est particulièrement avantageux dans le cas où le dispositif d'entraînement est de type électromagnétique à réluctance variable, ledit équipage mobile comprenant une armature mobile de ce dispositif. Ainsi, avantageusement, un actionneur selon l'invention est un actionneur électromagnétique linéaire à réluctance variable comprenant une armature mobile guidée en translations alternatives par rapport à une armature fixe solidaire du bâti.

L'invention s'applique néanmoins aussi à tout autre type d'actionneur comprenant au moins un équipage mobile guidé en translations alternatives par rapport aux bâti et/ou au moins un équipage mobile guidé en rotations alternatives à rapport au bâti. Un équipage mobile est une pièce mobile ou un ensemble de pièces mobiles solidaires dans leurs déplacements alternatifs par rapport au bâti. Un actionneur sur l'invention peut comprendre un seul équipage mobile, ou au contraire plusieurs équipages mobiles contrôlés par un même asservissement, ou par plusieurs asservissements similaires.

Par ailleurs, dans un actionneur sur l'invention, lesdits moyens de rappel de l'équipage mobile dans un sens opposé au sens d'entraînement peuvent être de diverses natures. Par exemple, ces moyens de rappel peuvent être formés par un autre dispositif d'entraînement en sens opposé, voire même par le même dispositif d'entraînement si ce dernier est bidirectionnel. Ces moyens de rappel peuvent aussi résulter du fonctionnement même de l'actionneur dans le système auquel il est intégré. Par exemple, si l'actionneur est utilisé pour entraîner une pompe, le fonctionnement de la pompe peut avoir pour effet de tendre à rappeler l'équipage mobile dans un sens opposé au sens d'entraînement.

En variante ou en combinaison, avantageusement et selon l'invention, lesdits moyens de rappel comprennent des moyens mécaniques de rappel élastique rappelant l'équipage mobile dans une position de repos distante de sa position extrême de fin de course de déplacement dans le sens entraînement. Ces moyens mécaniques de rappel élastique sont par exemple formés d'une lame flexible élastique et/ou d'un ressort de compression et/ou d'un ressort de traction interposé(s) entre l'équipage mobile et le bâti.

Avantageusement, un actionneur selon l'invention est adapté pour que l'équipage mobile présente une course de déplacement comprise entre 0,1 mm et 10 mm, et puisse être entraîné à fréquence comprise entre 0 et 1000 Hertz.

Avantageusement, dans un actionneur selon l'invention, l'asservissement peut-être réalisé par un circuit électronique formé essentiellement -voire exclusivement- de composants analogiques. De tels composants s'avèrent particulièrement avantageux dans le cadre des applications spatiales dans la mesure où ils sont particulièrement fiables, de grande durée de vie, et peu sensibles aux rayonnements tels que ceux rencontrés dans l'espace, par exemple à bord des satellites terrestres artificiels.

L'invention concerne également un actionneur caractérisé en combinaison par tout ou partie des caractéristiques mentionnées ci-dessus ou ci-après. Elle s'étend également à un procédé d'asservissement mis en oeuvre dans un actionneur selon l'invention.

D'autres buts, caractéristiques et avantages de l'invention apparaîtront à la lecture la description suivante d'un de ses modes de réalisation donné uniquement à titre d'exemple non limitatif et qui se réfère aux figures annexées dans lesquelles :

- la figure 1 est une vue schématique en coupe axiale d'un exemple d'actionneur selon l'invention formant une pompe,
- la figure 2 est un schéma de principe de la réalisation d'un asservissement pour l'actionneur de la figure 1,
- la figure 3 est un diagramme temporel théorique représentant d'une part le déplacement de l'équipage mobile de l'actionneur de la figure 1, d'autre part la valeur des différents signaux dans le circuit électronique réalisant l'asservissement de la figure 2,
- la figure 4 est un diagramme temporel similaire à celui de la figure 3, mais obtenu par une simulation analytique du fonctionnement de l'actionneur selon l'invention.

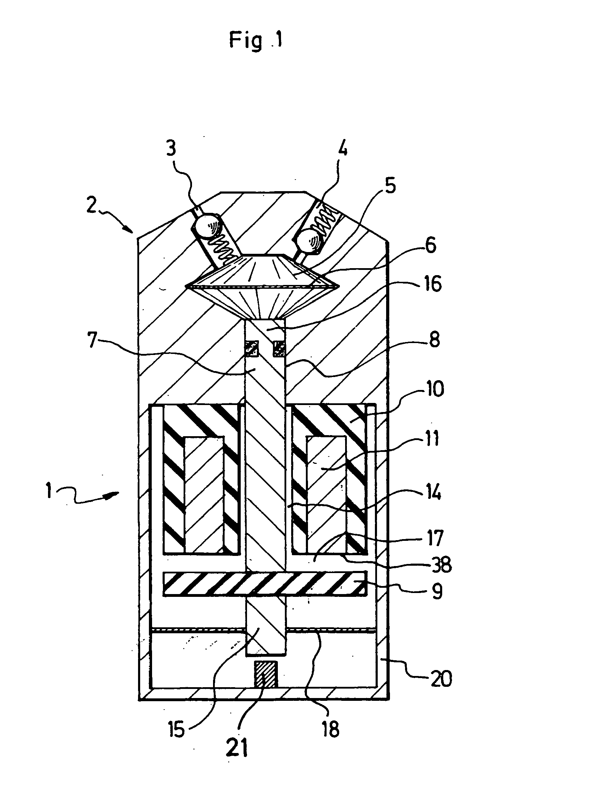

Dans l'exemple représenté sur la figure 1, l'actionneur 1 est de type à réluctance variable, et associé à une pompe 2 comprenant un bâti rigide 20 présentant un orifice d'admission 3, un orifice de refoulement 4, et une chambre de pompage 5 à membrane souple médiane étanche 6. Cette membrane 6 est mue par les variations de pression entraînées par le déplacement d'un piston 7 guidé en translations alternatives dans un cylindre 8 ménagé dans le bâti 20 et débouchant dans la chambre 5 à l'opposé des orifices 3, 4, le cylindre 8 et les orifices 3, 4 étant séparés par la membrane 6.

Le piston 7 est relié à une armature mobile 9 en matériau ferromagnétique, s'étendant radialement en forme générale de disque. L'armature mobile 9 est solidaire du piston 7 dans ses déplacements en translations alternatives, et l'ensemble formé du piston 7 et de l'armature mobile 9 forme un équipage mobile 7, 9. L'armature mobile 9 s'étend en regard d'une armature fixe 10 également en matériau ferromagnétique, de façon à former un entrefer 17 entre l'armature mobile 9 et l'armature fixe 10. L'armature fixe 10 loge un bobinage 11 alimenté par un circuit de commande 12.

Les armatures mobiles 9 et fixe 10 ainsi que le bobinage 11 sont adaptés pour former un dispositif d'entraînement à réluctance variable, de sorte que lorsqu'un courant électrique alimente le bobinage 11, une force électromagnétique attire l'armature mobile 9 vers l'armature fixe 10 dans le sens de la réduction de l'entrefer 17 qui les sépare.

Le bobinage 11 est logé dans un logement cylindrique formé dans l'armature fixe 10, et le piston 7 traverse un alésage axial 14 de l'armature fixe 10, l'armature mobile 9 étant accouplée (par exemple par système d'écrous et de contre écrous et/ou par clavetage et/ou par frettage et/ou par tout autre moyen de fixation) à l'extrémité 15 du piston 7 s'étendant à l'opposé, par rapport à l'alésage axial 14, de l'extrémité 16 du piston 7 orientée vers la chambre de pompage 6.

L'extrémité 15 du piston 7 accouplée à l'armature mobile 9 est également associée à un ressort 18 à lames radiales flexibles élastiques dont l'extrémité extérieure est fixée encastrée dans le bâti 20. Ce ressort 18 est adapté pour rappeler le piston 7 dans le sens de l'éloignement de l'armature mobile 9 par rapport à l'armature fixe 10, opposé au sens entraînement, lorsque le bobinage 11 n'est pas alimenté. Il est à noter également que la pression dans la chambre de pompage 6 tend naturellement également à rappeler le piston 7 dans le sens de l'éloignement lorsque le bobinage 11 n'est pas alimenté. Ainsi, le piston 7 est entraîné en translation dans le cylindre 8 dans un sens d'entraînement correspondant à une augmentation de pression dans la chambre de pompage 6 lorsque le bobinage 11 est alimenté en courant électrique, et est rappelé en translation dans le cylindre 8 dans un sens d'éloignement opposé au sens d'entraînement lorsque le bobinage 11 n'est pas alimenté en courant électrique. En conséquence, selon la fréquence d'alimentation en courant électrique du bobinage 11, l'armature mobile 9 et le piston 7 sont entraînés en translations alternatives axiales par rapport au bâti 20.

Un capteur de position 21 est fixé solidaire du bâti 20. Avantageusement, ce capteur 21 est du type inductif, et permet d'obtenir, dans son bobinage, un signal représentatif de la position de l'extrémité 15 de l'armature mobile 9, et donc du piston 7 par rapport à l'armature fixe 10 et au bâti 20.

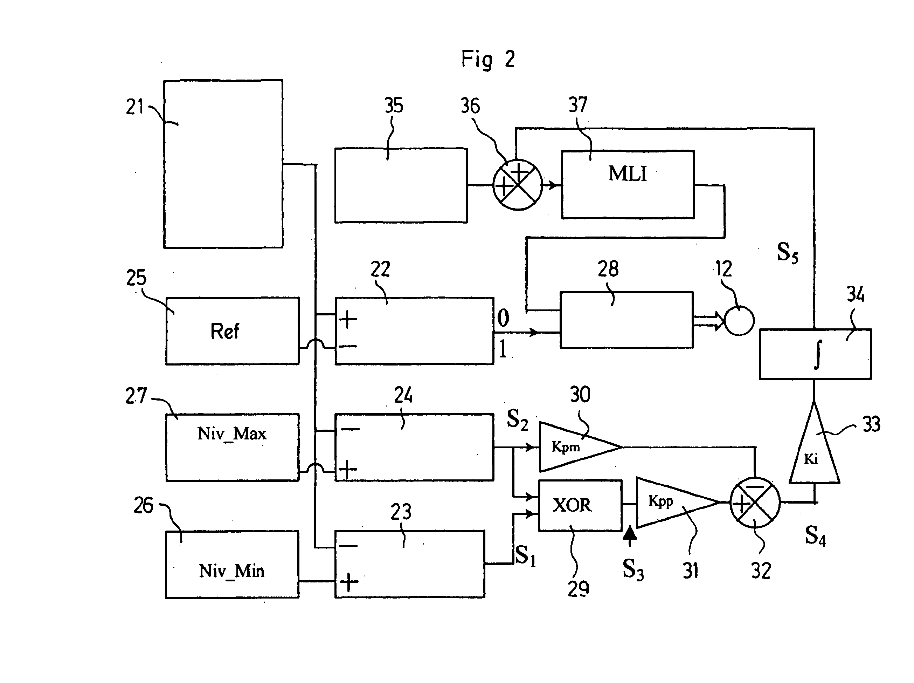

La figure 2 représente un exemple de circuit électronique réalisant un asservissement en boucle fermée permettant de contrôler le fonctionnement de l'actionneur.

Le signal de position obtenu à partir du capteur de position 21 est fourni à trois comparateurs respectivement 22, 23, 24.

Le premier comparateur 22 compare le signal de position à un signal de référence principale Ref délivré par un circuit 25 qui fournit une valeur de tension prédéterminée représentative de ce signal de référence Ref. Cette valeur peut être prédéterminée et mémorisée à la fabrication en usine. De préférence, le circuit 25 est associé à des moyens de réglage de cette valeur, permettant à l'utilisateur de réaliser un réglage initial de ce signal Ref, par exemple sous la forme d'un circuit (non représenté) permettant d'ajouter au signal de tension délivré par le circuit 25, un signal de tension variable de correction pouvant être ajusté par l'utilisateur.

La sortie de ce premier comparateur 22 est reliée à l'entrée d'un circuit commutateur 28 qui permet d'autoriser ou d'inhiber le circuit de commande 12 délivrant le signal de commande du bobinage 11. Le signal de commande n'est autorisé par ce circuit commutateur 28 que si l'armature mobile 9 est à une distance plus importante de l'armature fixe 10 que la position de l'armature mobile 9 définie par ce signal de référence principale Ref.

Le deuxième comparateur 23 compare le signal de position à un premier signal de position minimum Niv_Min délivré par un circuit 26 qui fournit une valeur de tension représentative de ce premier signal de position Niv_Min. Cette valeur peut être prédéterminée et mémorisée à la fabrication en usine. De préférence, le circuit 26 est associé à des moyens de réglage de cette valeur, permettant à l'utilisateur de réaliser un réglage initial de ce premier signal de position Niv_Min, par exemple sous la forme d'un circuit (non représenté) permettant d'ajouter au signal de tension délivré par le circuit 26, un signal de tension variable de correction pouvant être ajusté par l'utilisateur. Ce premier signal de position minimum Niv_Min correspond à une première référence de position de l'armature mobile 9 qui doit au moins être atteinte dans le sens d'entraînement.

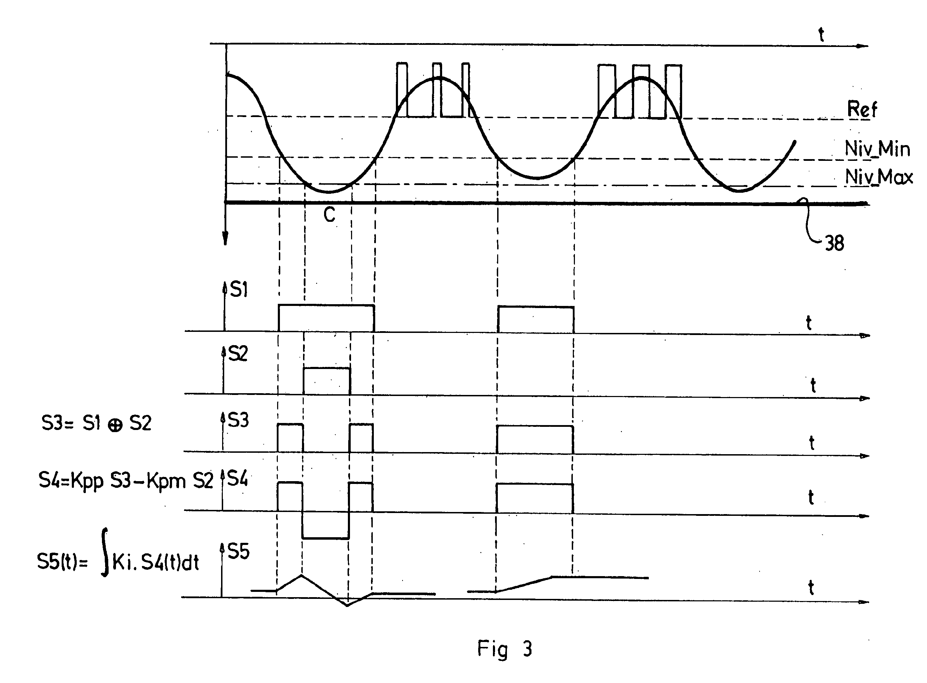

Ce deuxième comparateur 23 fournit un signal logique S1 qui, comme représenté figure 3, prend une valeur constante non nulle lorsque l'armature mobile 9 a dépassé la position définie par le dit premier signal de position minimum Niv_Min, et est nul tant que l'armature mobile 9 n'atteint pas la position définie par ce premier signal de position minimum Niv_Min.

Le troisième comparateur 24 compare le signal de position à un deuxième signal de position maximum Niv_Max délivré par un circuit 27 qui fournit une valeur de tension représentative de ce deuxième signal de position Niv_Max. Cette valeur peut être prédéterminée et mémorisée à la fabrication en usine. De préférence, le circuit 27 est associé à des moyens de réglage de cette valeur, permettant à l'utilisateur de réaliser un réglage initial de ce deuxième signal de position Niv_Max, par exemple sous la forme d'un circuit (non représenté) permettant d'ajouter au signal de tension délivré par le circuit 27, un signal de tension variable de correction pouvant être ajusté par l'utilisateur. Ce deuxième signal de position maximum Niv_Max correspond à une deuxième référence de position de l'armature mobile 9 qui doit être atteinte dans le sens d'entraînement. Il peut s'agir par exemple de la position extrême limite de consigne.

Ce troisième comparateur 24 fournit un signal logique S2 qui, comme représenté figure 3, prend une valeur constante non nulle lorsque l'armature mobile 9 a dépassé la position définie par ledit deuxième signal de position maximum Niv_Max, et est nul tant que l'armature mobile 9 n'atteint pas la position définie par ce deuxième signal de position maximum Niv_Max.

Les sorties du deuxième comparateur 23 et du troisième comparateur 24 sont reliés aux entrées d'une porte XOR 29 (OU exclusif) qui délivre un signal logique S3 qui est le OU exclusif des signaux S1 et S2.

La sortie du troisième comparateur 24 délivrant le signal logique S2 est également reliée à l'entrée d'un amplificateur 30 qui délivre un signal amplifié avec un gain constant Kpm, c'est-à-dire de valeur Kpm.S2. La sortie de la porte XOR 29 délivrant le signal logique S3 est reliée à l'entrée d'un amplificateur 31 qui délivre un signal amplifié avec un gain constant Kpp, c'est-à-dire de valeur Kpp.S3. Les deux sorties et des amplificateurs 30, 31 délivrant respectivement ces deux signaux amplifiés sont reliées aux entrées d'un circuit 32 soustracteur qui délivre un signal S4 dont la valeur est :

$$S4 = Kpp.S3 - Kpm.S2$$

La sortie de ce circuit 32 sous ce facteur délivrant ce signal S4 est reliée à l'entrée d'un amplificateur 33 qui délivre un signal amplifié avec un gain constant Ki, c'est-à-dire de valeur Ki.S4. La sortie de cet amplificateur 33 délivrant ce signal amplifié est reliée à l'entrée d'un circuit intégrateur 34 qui délivre un signal S5 dont la valeur est :

$$S5 = \int Ki\, S4(t)dt$$

Le signal S3 est représentatif de la durée pendant laquelle l'armature mobile 9 dépasse, dans le sens d'entraînement, la première référence de position Niv_Min sans dépasser la deuxième référence de position Niv_Max. Le signal S2 est représentatif de la durée pendant laquelle l'armature mobile 9 dépasse la deuxième référence de position Niv_Max.

Le signal S5 est donc représentatif, aux coefficients Ki, Kpp et Kpm multiplicatifs près, de la différence entre la durée pendant laquelle l'armature mobile 9 est située entre la première référence de position Niv_Min et la deuxième référence de position Niv_Max, et la durée pendant laquelle l'armature mobile 9 dépasse, dans le sens d'entraînement, la deuxième référence de position Niv_Max.

Ce signal S5 permet ainsi d'évaluer la différence entre l'énergie impartie à l'équipage mobile 7, 9 par le bobinage 11 au cours du cycle précédent, et l'énergie, dite énergie nominale, à impartir à cet équipage mobile 7, 9 pour le déplacer exactement jusqu'à la position extrême de consigne représentée par le signal de position maximum Niv_Max.

Le signal S5 est utilisé par l'asservissement à titre de signal de correction pour modifier la commande du bobinage 11 par le circuit 12 de commande. À cet effet, le circuit de commande 12 est associé à un générateur MLI 37, qui délivre au circuit de commande 12 un signal de modulation de largeur d'impulsions du signal de commande. Ainsi, ce circuit de commande 12 délivre un signal de commande en tension, d'amplitude prédéterminée constante (choisie en particulier pour optimiser le fonctionnement du dispositif d'entraînement à réluctance variable ainsi formé), et constitué d'une série d'impulsions de durée identique mais dépendant du rapport cyclique du générateur MLI 37, de sorte que l'énergie impartie à l'armature mobile 9, et donc à l'équipage mobile 7, 9, par le bobinage 11 est proportionnelle à la durée de chacune des impulsions, c'est-à-dire à leur largeur sur un diagramme temporel. Le rapport cyclique détermine la durée de chacune des impulsions du signal de modulation de largeur d'impulsions délivré par le générateur MLI 37, et donc celle des impulsions du signal de commande. Un tel générateur MLI 37 est connu en soi, et fournit un signal haché selon une fréquence de base élevée, par exemple de l'ordre de 20 kHz. Pour chaque impulsion, le rapport cyclique, dont la valeur est entre 0 % et 100 % détermine la durée d'application de cette impulsion.

Le signal de correction S5 permet de modifier le rapport cyclique du signal de modulation de largeur d'impulsions délivré par le générateur MLI 37.

Pour ce faire, la sortie du circuit intégrateur 34 délivrant ce signal de correction S5 est reliée à l'entrée d'un circuit additionneur 36 qui reçoit par ailleurs une valeur de référence du rapport cyclique délivré par un circuit 35. Cette valeur de référence est par exemple un signal de tension de valeur prédéterminée et mémorisée à la fabrication en usine. De préférence, le circuit 35 est associé à des moyens de réglage de cette valeur, permettant à l'utilisateur de réaliser un réglage initial de cette valeur de référence du rapport cyclique, par exemple sous la forme d'un circuit (non représenté) permettant d'ajouter au signal de tension délivré par le circuit 35, un signal de tension variable de correction pouvant être ajusté par l'utilisateur. Cette valeur de référence du rapport cyclique est prédéterminée de façon qu'après addition avec la valeur moyenne du signal de correction S5 obtenue lorsque l'armature mobile 9 arrive exactement à la position de consigne Niv_Max, la valeur du rapport cyclique fournie à l'entrée du générateur MLI 37 permette d'obtenir un signal de commande correspondant au moins sensiblement à l'entraînement de l'équipage mobile 7, 9 dans le sens d'entraînement jusqu'à une position extrême estimée approximativement selon l'application et le mode de fonctionnement envisagés pour l'actionneur.

La sortie du circuit additionneur 36 est reliée à l'entrée du générateur MLI 37, de sorte que le circuit additionneur 36 fournit une valeur de rapport cyclique au générateur MLI 37, ce dernier élaborant un signal de modulation de largeur d'impulsions dont le rapport cyclique dépend de la valeur qui lui est fournie par le circuit additionneur 36. La sortie du générateur MLI 37 délivrant le signal de modulation de largeur d'impulsions est reliée à une entrée du circuit commutateur 28 qui délivre au circuit de commande 12, selon l'état du signal fourni par le premier comparateur 22, soit ce signal de modulation de largeur d'impulsions, soit un signal nul.

Le procédé mis en oeuvre dans l'asservissement d'un actionneur selon l'invention est le suivant. Si l'armature mobile 9 dépasse la position de consigne Niv_Max (première situation représentée figure 3), le signal S2 n'est pas nul, et le signal de correction S5 est négatif, et le circuit additionneur 36 fournit au générateur MLI 37 une valeur de rapport cyclique plus faible, de sorte que l'énergie d'entraînement fournie à l'équipage mobile 7, 9 au cycle suivant est également plus faible. Si au contraire l'armature mobile 9 n'atteint pas la position de consigne Niv_Max (deuxième situation représentée figure 3), le signal S2 est nul et le signal de correction S5 est positif. Le circuit additionneur 36 fournit alors au générateur MLI 37 une valeur de rapport cyclique plus importante, de sorte que l'énergie d'entraînement fournie à l'équipage mobile 7, 9 au cycle suivant est également plus importante.

L'équipage mobile 7, 9 est entraîné par le bobinage 11 uniquement pendant une partie de la durée de chaque cycle de fonctionnement, lorsque l'armature mobile 9 est dans une position extrême opposée à la position extrême limite de consigne, c'est-à-dire lorsque l'entrefer 17 est maximum. Cette durée d'application de la force électromagnétique à l'armature mobile 9 est déterminée par le signal de référence Ref, qui constitue ainsi un premier réglage grossier de l'énergie d'entraînement fournie à l'équipage mobile 7, 9 à chaque cycle.

Il est à noter que dans le mode de réalisation préférentiel décrit ci-dessus et représenté sur les figures, le signal de commande, et donc l'entraînement par le bobinage 11, sont appliqués de part et d'autre de la position extrême d'entrefer maximum, les durées d'application d'un côté de l'autre de cette position extrême étant définies par un même signal de référence Ref. Ainsi, dans un premier temps, le bobinage 11 commence à appliquer une force électromagnétique à l'armature mobile 9 dans le sens d'entraînement, alors que cette dernière se déplace encore dans un sens opposé au sens d'entraînement. Dans ce premier temps, la force électromagnétique fournie par le bobinage 11 a donc pour effet de freiner l'armature mobile 9.

En variante, rien n'empêche de prévoir au contraire que le bobinage 11 ne soit alimenté que lorsque l'armature mobile 9 se déplace dans le sens d'entraînement, c'est-à-dire après avoir dépassé la position extrême d'entrefer maximum. Rien n'empêche également en variante de prévoir deux signaux de référence différents, l'un déterminant l'instant où le signal de commande (et donc la force électromagnétique délivrée par le bobinage 11) commence à être appliqué, l'autre déterminant l'instant où le signal de commande (et donc la force électromagnétique délivrée par le bobinage 11) est interrompu. Dans cette dernière variante, on peut en effet alors ajuster indépendamment l'une de l'autre chacune des durées d'application de la force d'entraînement de part et d'autre de la position extrême d'entrefer maximum.

Dans un actionneur selon l'invention, l'asservissement ajuste automatiquement le rapport cyclique du signal de commande du bobinage 11 en fonction du signal de correction S5, ce qui permet de réaliser un réglage fin de l'énergie impartie à l'équipage mobile 7, 9.

Par ailleurs, les coefficients multiplicateurs Kpm, Kpp, et Ki, dont les valeurs peuvent être ajustées à la fabrication, ou même par l'utilisateur si les circuit amplificateurs correspondants 30, 31 et 33 sont à gain variable et réglable, permettent d'ajuster les caractéristiques dynamiques de la correction appliquée au signal de commande au cycle subséquent.

Le coefficient Kpm permet d'ajuster la contribution de la durée de dépassement de la deuxième référence de position Niv_Max dans le signal de correction S5. Ce coefficient Kpm permet donc d'ajuster la sensibilité de la correction dans le sens d'une diminution de l'énergie à fournir.

Le coefficient Kpp permet d'ajuster la contribution dans le signal de correction S5 de la durée pendant laquelle l'armature mobile 9 est située entre la première référence de position Niv_Min et la deuxième référence de position Niv_Max. Ce coefficient Kpp permet donc d'ajuster la sensibilité de la correction dans le sens d'une augmentation de l'énergie à fournir.

Le coefficient Ki permet d'ajuster la valeur globale du signal de correction S5 par rapport à la référence de rapport cyclique fournie par le circuit 35. Ce coefficient Ki permet donc d'ajuster la sensibilité globale de l'asservissement.

Dans un actionneur selon l'invention, le signal de commande délivré par le circuit de commande 12 interrompt le dispositif d'entraînement (bobinage 11) avant que l'équipage mobile 7, 9 n'arrive en position de fin de course dans le sens d'entraînement. Il a été constaté qu'en pratique, malgré le caractère relativement complexe du comportement d'un tel actionneur à réluctance variable dont l'armature mobile 9 est en régime pouvant être qualifié de balistique lorsqu'elle n'est pas soumise à la force électromagnétique du bobinage 11, un asservissement particulièrement efficace, précis, fiable et performant peut ainsi être obtenu, avec des signaux de référence de position Ref, Niv_Min, Niv_Max et des coefficients multiplicateurs Kpm, Kpp, et Ki constants.

Les essais démontrent que l'actionneur selon l'invention présente une très grande stabilité de fonctionnement, aussi bien avec une pompe pneumatique qu'avec une pompe hydraulique, avec des variations de pression brusques, et peut subir des variations de tension d'alimentation, typiquement de 50 V à 100 V (ce qui permet de réduire le volume des condensateurs et convertisseurs d'alimentation). Si nécessaire, l'amplitude de la tension d'alimentation du bobinage 11 peut aussi être réglable par l'utilisateur.

Cela reste vrai dans une large gamme de fréquences de fonctionnement, et en particulier pour des fréquences relativement élevées, les résultats obtenus démontrant que la fréquence de fonctionnement peut aller au moins jusqu'à 1000 Hertz pour une course de déplacement de plusieurs millimètres et avec un entrefer minimum très faible, notamment de l'ordre de 0,05 mm. D'excellents résultats expérimentaux ont pu être obtenus en particulier pour des fréquences comprises entre 0 et 300 Hz.

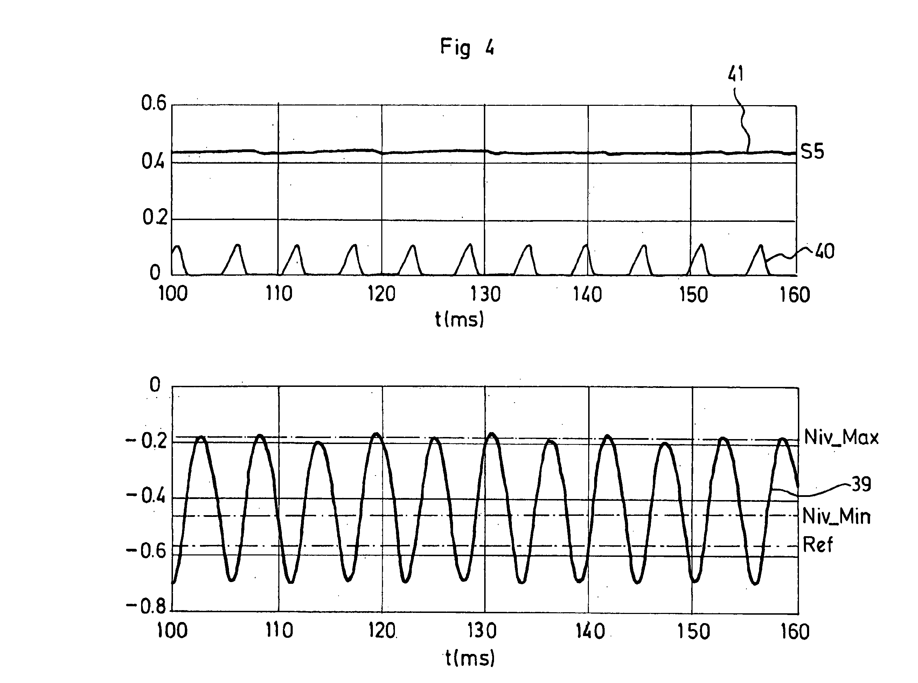

La figure 4 donne un exemple de résultats obtenus avec un actionneur conforme au mode de réalisation de la figure 1. La course moyenne du piston 7 était de l'ordre de 0,5 mm, l'entrefer minimum était de lors de 0,11 mm, et l'entrefer maximum de l'ordre de 0,7 mm. La fréquence de hachage de la tension d'alimentation du bobinage 11 était de 20 kHz. Sur cette figure, la courbe 39 représente le signal de position de l'armature mobile 9 fourni par le capteur 21, la courbe 40 représente l'intensité du courant dans la bobine 11, et la courbe 41 représente les variations du signal de correction S5. Comme on le voit ainsi que sur la figure 3, le fonctionnement de l'actionneur est contrôlé avec une grande précision.

La précision d'un tel asservissement selon l'invention permet en particulier de réduire considérablement l'entrefer minimum en fonctionnement. En pratique, il a été démontré que cet entrefer minimum peut être de l'ordre de 0,05 mm pour une fréquence de fonctionnement de 300 Hz. Une telle valeur d'entrefer minimum a pour effet de diminuer la consommation électrique et permet également de réduire le volume de l'actionneur, et d'augmenter considérablement la puissance volumique fournie, ce qui constitue un avantage déterminant dans les applications embarquées, notamment dans les véhicules ou les systèmes spatiaux.

Un actionneur selon l'invention est compact, présentent un excellent rendement, une faible masse, une grande fiabilité. Il peut être avantageusement utilisé dans toutes les applications embarquées, statiques ou dynamiques.

Sur la figure 3, on a représenté un exemple dans lequel l'entrefer minimum est non nul, et dans lequel le déplacement de l'équipage mobile 7, 9 dans le sens d'entraînement jusqu'à la référence de position Niv_Max n'est pas limité par une butée. Ainsi, la référence de position Niv_Max est à distance de la paroi 38 de l'armature fixe 10 définissant, avec l'armature mobile 9, l'entrefer 17.

En variante, il est possible de définir la deuxième référence de position Niv_Max au-delà de la paroi 38 de l'armature fixe 10 située en regard de l'armature mobile 9 définissant l'entrefer 17 avec cette dernière. Dans ce cas, l'armature mobile 9 vient au contact de l'armature fixe 10, ce qui produit des chocs d'énergie maîtrisée à cadence élevée. De tels chocs peuvent aussi être obtenus par un contact d'une extrémité du piston 7 sur une butée solidaire du bâti fixe 20. Des moyens élastiques peuvent être interposés entre les deux pièces qui viennent en contact afin d'amortir les chocs, si nécessaire. En tout état de cause, l'asservissement de l'actionneur selon l'invention permet également de contrôler l'énergie développée au cours de ces chocs avec une grande précision, et avec les mêmes avantages que ceux indiqués ci-dessus dans le cas d'un fonctionnement à entrefer minimum non nul.

Il est à noter que l'ensemble du circuit d'asservissement représenté figure 2 peut être réalisé par des composants analogiques. À ce titre, les différents circuits fonctionnels mentionnés ci-dessus peuvent être réalisés de façon connue en soi, par des composants analogiques, notamment à base d'amplificateurs ou d'amplificateurs opérationnels.

Il va de soi que l'invention peut faire l'objet de nombreuses autres applications et variantes de réalisation par rapport au mode de réalisation représenté sur les figures et décrit ci-dessus. En particulier, l'invention s'applique également à un actionneur présentant plusieurs équipages mobiles entraînés simultanément ou non, par un même dispositif d'entraînement ou non, en translations alternatives et/ou en rotations alternatives (rotor d'un moteur électrique par exemple). Bien que particulièrement avantageuse avec un dispositif d'entraînement de type électromagnétique à réluctance variable, l'invention s'applique cependant également à d'autres types de dispositifs d'entraînement, par exemple à solénoïde, ou à moteur hydraulique ou pneumatique ou thermique, ou encore à un actionneur comprenant plusieurs dispositifs d'entraînement combinés. Par ailleurs, le dispositif d'entraînement peut être bidirectionnel, et faire office de moyens de rappel dans le sens opposé au sens d'entraînement vers la position extrême limite. En outre, dans cette variante, l'asservissement peut être utilisé pour contrôler le déplacement de l'équipage mobile non pas dans un seul sens d'entraînement, mais dans les deux sens de déplacement, de façon similaire, un signal de correction étant élaboré à chaque fois que l'équipage mobile arrive au voisinage de l'une de ses positions extrêmes de déplacement.

**Revendications**

1. - Actionneur alternatif comprenant :

- un bâti (20),
- au moins un équipage mobile (7, 9) guidé par rapport au bâti (20) de façon à pouvoir se déplacer selon des mouvements alternatifs par rapport à ce bâti (20),
- un dispositif d'entraînement (9, 10, 11) de l'équipage mobile (7, 9) dans au moins un sens, dit sens d'entraînement,
- des moyens (18) de rappel de l'équipage mobile (7, 9) dans un sens opposé au sens d'entraînement,
- au moins un capteur (21) de détection de la position de l'équipage mobile (7, 9) par rapport au bâti (20) apte à délivrer un signal de position représentatif au moins de la position de cet équipage mobile (7, 9) au voisinage de sa position extrême de fin de course de déplacement dans le sens d'entraînement,
- un asservissement (21 à 37) adapté pour ajuster et délivrer, à chaque cycle de déplacement de l'équipage mobile (7, 9) dans le sens d'entraînement, un signal de commande du dispositif d'entraînement (9,10,11), dont la valeur est déterminée pour chaque cycle, en fonction de la différence entre une position extrême prise précédemment par l'équipage mobile (7, 9) dans le sens d'entraînement telle que déterminée par le signal de position et une position extrême limite de consigne prédéterminée de l'équipage mobile (7, 9) dans son déplacement dans le sens d'entraînement,

**caractérisé en ce que** l'asservissement (21 à 37) :

- comprend au moins une chaîne de mesure adaptée pour délivrer pour chaque cycle de déplacement de l'équipage mobile dans le sens d'entraînement, au moins un signal, dit signal de correction (S5), représentatif de la différence entre l'énergie impartie à l'équipage mobile (7, 9) par le dispositif d'entraînement (9,10,11) au cours d'au moins un cycle précédant celui auquel le signal de commande est appliqué, et l'énergie, dite énergie nominale, à impartir à cet équipage mobile (7, 9) pour le déplacer exactement jusqu'à sa position extrême de consigne, ledit signal de correction (S5) étant représentatif d'une différence entre une première valeur proportionnelle à une durée pendant laquelle l'équipage mobile (7, 9) dépasse, dans le sens d'entraînement, une première référence de position (Niv_Min) sans dépasser une deuxième référence de position (Niv_Max) située à l'aval de la première référence de position (Niv_Min) dans le sens d'entraînement, et une deuxième valeur proportionnelle à une durée pendant laquelle l'équipage mobile (7, 9) dépasse, dans le sens d'entraînement, ladite deuxième référence de position (Niv_Max),
- est adapté pour ajuster à chaque cycle le signal de commande en fonction dudit signal de correction (S5),
- et est adapté pour délivrer un signal de commande, ce signal de commande interrompant le dispositif d'entraînement avant que l'équipage mobile (7, 9) n'arrive en position de fin de course dans le sens d'entraînement.

2. - Actionneur selon la revendication 1, **caractérisé en ce que** le signal de correction (S5) est représentatif au moins de la différence entre l'énergie impartie à l'équipage mobile (7, 9) par le dispositif d'entraînement (9,10,11) au cours du cycle de déplacement précédant immédiatement celui auquel le signal de commande est appliqué, et l'énergie nominale.

3. - Actionneur selon l'une des revendications 1 ou 2, **caractérisé en ce que** le signal de correction (S5) est représentatif uniquement de la différence entre l'énergie impartie à l'équipage mobile (7, 9) par le dispositif d'entraînement (9,10,11) au cours du cycle de déplacement précédant immédiatement celui auquel le signal de commande est appliqué, et l'énergie nominale.

4. - Actionneur selon l'une des revendications 1 à 3, **caractérisé en ce que** l'asservissement (21 à 37) comprend des moyens (26,27) de réglage permettant de régler la valeur de la première référence de position (Niv_Min) et la valeur de la deuxième référence de position (Niv_Max).

5. - Actionneur selon l'une des revendications 1 à 4, **caractérisé en ce que** la deuxième référence de position (Niv_Max) correspond à la position extrême limite de consigne.

6. - Actionneur selon l'une des revendications 1 à 5, **caractérisé en ce que** l'asservissement (21 à 37) est adapté a chaque cycle pour n'autoriser l'application du signal de commande du dispositif d'entraînement que lorsque l'armature mobile (9) est à une distance plus importante de l'armature fixe (10) qu'une position prédéterminée, dite référence de position principale (Ref), de l'armature mobile (9).

7. - Actionneur selon la revendication 6, caractérisé en ce l'asservissement (21 à 37) est adapté à chaque cycle pour limiter la durée totale d'application du signal de commande à une durée inférieure à la durée pendant laquelle l'armature mobile (9) est située au-delà de ladite référence de position principale (Ref).

8. - Actionneur selon l'une des revendications 6 ou 7, **caractérisé en ce que** l'asservissement (21 à 37) comprend des moyens (25) de réglage permettant de régler la valeur de ladite référence de position principale (Ref).

9. - Actionneur selon l'une des revendications 1 à 8, **caractérisé en ce que** le dispositif d'entraînement (9,10,11) étant du type fournissant une énergie d'entraînement croissante avec la durée d'application d'un signal de commande électrique, l'asservissement (21 à 37) est adapté pour ajuster le signal de commande, à partir du signal de correction, par modulation de largeur d'impulsions de ce signal de commande.

10. - Actionneur selon la revendication 9, **caractérisé en ce que** l'asservissement (21 à 37) comprend des moyens permettant de régler la durée totale d'application du signal de commande indépendamment du signal de correction (S5).

11. - Actionneur selon l'une des revendications 1 à 10, **caractérisé en ce que** l'asservissement (21 à 37) est réalisé par un circuit électronique formé de composants exclusivement analogiques.

12. - Actionneur selon l'une des revendications 1 à 11, **caractérisé en ce qu'**il comprend au moins un équipage mobile (7, 9) guidé en translations alternatives par rapport au bâti (20).

13. - Actionneur selon l'une des revendications 1 à 12, **caractérisé en ce qu'**il comprend au moins un équipage mobile guidé en rotations alternatives par rapport au bâti (20).

14. - Actionneur selon l'une des revendications 1 à 13, **caractérisé en ce que** le dispositif d'entraînement (9, 10, 11) est du type électromagnétique à réluctance variable.

15. - Actionneur selon l'une des revendications 1 à 14, **caractérisé en ce qu'**il est adapté pour que l'équipage mobile (7, 9) présente une course de déplacement comprise entre 0,1 mm et 10 mm, et puisse être entraîné à fréquence comprise entre 0 et 1000 Hertz.

**Patentansprüche**

1. Hin- und hergehendes Stellorgan, folgendes umfassend:

   - ein Gestell (20),
   - zumindest ein bewegliches Organ (7, 9), das im Verhältnis zum Gestell (20) geführt wird, sodass es sich im Verhältnis zu diesem Gestell (20) hin- und herbewegen kann,
   - eine Antriebsvorrichtung (9, 10, 11) des beweglichen Organs (7, 9) in zumindest eine Richtung, die Antriebsrichtung genannt wird,
   - Mittel (18) zum Rückholen des beweglichen Organs (7, 9) in eine entgegengesetzte Richtung zur Antriebsrichtung,
   - zumindest einen Sensor (21) zum Erfassen der Position des beweglichen Organs (7, 9) im Verhältnis zum Gestell (20), der imstande ist, ein Positionssignal abzugeben, das zumindest für die Position dieses beweglichen Organs (7, 9) in der Nähe seiner Extremposition am Bewegungsendschalter in die Antriebsrichtung repräsentativ ist,
   - eine Steuerung (21 bis 37), die ausgeführt ist, um bei jedem Bewegungszyklus des beweglichen Organs (7, 9) in die Antriebsrichtung ein Steuersignal der Antriebsvorrichtung (9, 10, 11) anzupassen und abzugeben, dessen Wert für jeden Zyklus in Abhängigkeit vom Unterschied zwischen einer Extremposition, die zuvor, wie vom Positionssignal bestimmt, vom beweglichen Organ (7, 9) in die Antriebsrichtung eingenommen wurde, und einer vorbestimmten Soll-Grenzextremposition des beweglichen Organs (7, 9) bei dessen Bewegung in die Antriebsrichtung bestimmt wird, **dadurch gekennzeichnet, dass** die Steuerung (21 bis 37) :

- zumindest eine Messkette umfasst, die ausgeführt ist, um für jeden Bewegungszyklus des beweglichen Organs in die Antriebsrichtung zumindest ein Signal abzugeben, das Korrektursignal (S5) genannt wird, und das repräsentativ für den Unterschied zwischen der Energie ist, die dem beweglichen Organ (7, 9) von der Antriebsvorrichtung (9, 10, 11) zumindest im Laufe eines Zyklus zugeteilt wird, der jenem vorangeht, auf den das Steuersignal angewandt wird, und jener Energie, die Nominalenergie genannt wird, und die diesem beweglichen Organ (7, 9) zuzuteilen ist, um es genau bis zu seiner Soll-Extremposition zu bewegen, wobei das besagte Korrektursignal (S5) repräsentativ für einen Unterschied zwischen einem ersten Proportionalwert für eine Dauer ist, während der das bewegliche Organ (7, 9) eine erste Positionsreferenz (Pos_Min) in die Antriebsrichtung überschreitet, ohne eine zweite Positionsreferenz (Pos_Max) zu überschreiten, die sich in Antriebsrichtung gesehen nach der ersten Positionsreferenz (Pos_Min) befindet, und einem zweiten Proportionalwert für eine Dauer, während der das bewegliche Organ (7, 9) die besagte zweite Positionsreferenz (Pos_Max) in Antriebsrichtung überschreitet,

- ausgeführt ist, um das Steuersignal bei jedem Zyklus in Abhängigkeit vom besagten Korrektursignal (S5) anzupassen,

- und ausgeführt ist, um ein Steuersignal abzugeben, wobei dieses Steuersignal die Antriebsvorrichtung unterbricht, bevor das bewegliche Organ (7, 9) die Endschalterposition in Antriebsrichtung erreicht.

2. Stellorgan nach Anspruch 1, **dadurch gekennzeichnet, dass** das Korrektursignal (S5) repräsentativ zumindest für den Unterschied zwischen der Energie, die dem beweglichen Organ (7, 9) von der Antriebsvorrichtung (9, 10, 11) im Laufe des Zyklus zugeteilt wird, der unmittelbar jenem vorangeht, auf den das Steuersignal angewandt wird, und der Nominalenergie ist.

3. Stellorgan nach einem der Ansprüche 1 oder 2, **dadurch gekennzeichnet, dass** das Korrektursignal (S5) repräsentativ nur für den Unterschied zwischen der Energie, die dem beweglichen Organ (7, 9) von der Antriebsvorrichtung (9, 10, 11) zumindest im Laufe des Zyklus zugeteilt wird, der unmittelbar jenem vorangeht, auf den das Steuersignal angewandt wird, und der Nominalenergie ist.

4. Stellorgan nach einem der Ansprüche 1 bis 3, **dadurch gekennzeichnet, dass** die Steuerung (21 bis 37) Einstellmittel (26, 27) umfasst, mit denen man den Wert der ersten Positionsreferenz (Pos_Min) und den Wert der zweiten Positionsreferenz (Pos_Max) einstellen kann.

5. Stellorgan nach einem der Ansprüche 1 bis 4, **dadurch gekennzeichnet, dass** die zweite Positionsreferenz (Pos_Max) der Soll-Grenzextremposition entspricht.

6. Stellorgan nach einem der Ansprüche 1 bis 5, **dadurch gekennzeichnet, dass** die Steuerung (21 bis 37) in jedem Zyklus ausgeführt ist, um die Anwendung des Steuersignals der Antriebsvorrichtung nur dann zuzulassen, wenn die bewegliche Armatur (9) in einem größeren Abstand zur festen Armatur (10) steht, als eine vorbestimmte Position der beweglichen Armatur (9), die Hauptpositionsreferenz (Ref) genannt wird.

7. Stellorgan nach Anspruch 6, **dadurch gekennzeichnet, dass** die Steuerung (21 bis 37) in jedem Zyklus ausgeführt ist, um die Gesamtanwendungsdauer des Steuersignals auf eine Dauer einzugrenzen, die kürzer ist, als die Dauer, während der sich die bewegliche Armatur (9) über der besagten Hauptpositionsreferenz (Ref) hinaus befindet.

8. Stellorgan nach einem der Ansprüche 6 oder 7, **dadurch gekennzeichnet, dass** die Steuerung (21 bis 37) Einstellmittel (25) umfasst, mit denen der Wert der besagten Hauptpositionsreferenz (Ref) eingestellt werden kann.

9. Stellorgan nach einem der Ansprüche 1 bis 8, **dadurch gekennzeichnet, dass** die Antriebsvorrichtung (9, 10, 11) dergestalt ist, dass sie eine mit Anwendungsdauer eines elektrischen Steuersignals ansteigende Antriebsenergie liefert, und die Steuerung (21 bis 37) ausgeführt ist, um das Steuersignal ausgehend vom Korrektursignal durch die Modulierung der Impulsbreite dieses Steuersignals anzupassen.

10. Stellorgan nach Anspruch 9, **dadurch gekennzeichnet, dass** die Steuerung (21 bis 37) Mittel umfasst, anhand derer man die Gesamtanwendungsdauer des Steuersignals unabhängig vom Korrektursignal (S5) einstellen kann.

11. Stellorgan nach einem der Ansprüche 1 bis 10, **dadurch gekennzeichnet, dass** die Steuerung (21 bis 37) durch einen Elektronikkreis erzeugt wird, der durch ausschließlich analoge Komponenten gebildet wird.

**12.** Stellorgan nach einem der Ansprüche 1 bis 11, **dadurch gekennzeichnet, dass** es zumindest ein bewegliches Organ (7, 9) umfasst, das bei hin- und herführenden Vorschubbewegungen im Verhältnis zum Gestell (20) geführt wird.

**13.** Stellorgan nach einem der Ansprüche 1 bis 12, **dadurch gekennzeichnet, dass** es zumindest ein bewegliches Organ umfasst, das bei hin- und herführenden Rotationsbewegungen im Verhältnis zum Gestell (20) geführt wird.

**14.** Stellorgan nach einem der Ansprüche 1 bis 13, **dadurch gekennzeichnet, dass** die Antriebsvorrichtung (9, 10, 11) eine elektromagnetische Vorrichtung mit variabler Reluktanz ist.

**15.** Stellorgan nach einem der Ansprüche 1 bis 14, **dadurch gekennzeichnet, dass** es ausgeführt ist, damit das bewegliche Organ (7, 9) eine Hubbewegung zwischen 0,1 mm und 10 mm aufweist, und mit einer Frequenz angetrieben werden kann, die zwischen 0 und 1000 Hertz liegt.

**Claims**

**1.** A reciprocating actuator comprising:

- a rack (20),
- at least one moving element (7, 9) guided relative to the rack (20) so as to be able to be displaced with reciprocating motion relative to said rack (20),
- a device (9, 10, 11) for driving the moving element (7, 9) in at least one direction, called the driving direction,
- means (18) of returning the moving element (7, 9) in a direction opposing the driving direction,
- at least one sensor (21) for detecting the position of the moving element (7, 9) relative to the rack (20), capable of delivering a position signal representative of at least the position of said moving element (7, 9) in the vicinity of its extreme end of displacement position in the driving direction,
- a servocontrol (21 to 37) adapted to adjust and deliver, for each displacement cycle of the moving element (7, 9) in the driving direction, a control signal of the driving device (9, 10, 11), the value thereof being determined for each cycle according to the difference between an extreme position adopted previously by the moving element (7, 9) in the driving direction as determined by the position signal and a predetermined extreme limit position of the moving element (7, 9) in its displacement in the driving direction,

**characterized in that** the servocontrol (21 to 37):

- comprises at least one measuring chain designed to deliver for each displacement cycle of the moving element in the driving direction, at least one signal, called the correction signal (S5), representative of the difference between the energy imparted on the moving element (7, 9) by the driving device (9, 10, 11) during at least one cycle preceding that in which the control signal is applied, and the energy, called nominal energy, to be imparted on this moving element (7, 9) to displace it exactly to its extreme set-point position, said correction signal (S5) being representative of a difference between a first value which is proportional to a time period during which the moving element (7, 9) exceeds, in the driving direction, a first position reference (Niv_Min) without exceeding a second position reference (Niv_Max) located downstream of the first position reference (Niv_Min) in the driving direction, and a second value which is proportional to a time period during which the moving element (7, 9) exceeds, in the driving direction, said second position reference (Niv_Max),
- is designed to adjust for each cycle the control signal according to said correction signal (S5),
- and is designed to deliver a control signal, said control signal interrupting the driving device before the moving element (7, 9) arrives in the end of travel position in the driving direction.

**2.** The actuator according to claim 1, **characterized in that** the correction signal (S5) is representative of at least the difference between the energy imparted to the moving element (7, 9) by the driving device (9, 10, 11) during the displacement cycle immediately preceding that in which the control signal is applied, and the nominal energy.

**3.** The actuator according to one of claims 1 or 2, **characterized in that** the correction signal (S5) is representative solely of the difference between the energy imparted on the moving element (7, 9) by the driving device (9, 10, 11) during the displacement cycle immediately preceding that in which the control signal is applied, and the nominal energy.

**4.** The actuator according to one of claims 1 to 3, **characterized in that** the servocontrol (21 to 37) comprises adjustment means (26, 27) making it possible to adjust the value of the first position reference (Niv_Min) and the value of the second position reference (Niv_Max).

**5.** The actuator according to claims 1 to 4, **characterized in that** the second position reference (Niv_Max) corresponds to the extreme limit position.

**6.** The actuator according to one of claims 1 to 5, **characterized in that** the servocontrol (21 to 37) is adapted at each cycle to only authorize the application of the control signal of the driving device when the moving armature (9) is at a greater distance from the fixed armature (10) than a predetermined position, called the principal position reference (Ref), of the moving armature (9).

**7.** The actuator according to claim 6, **characterized in that** the servocontrol (21 to 37) is adapted at each cycle to limit the total duration of application of the control signal to a duration which is less than the time period during which the moving armature (9) is located beyond said principal position reference (Ref).

**8.** The actuator according to one of claims 6 or 7, **characterized in that** the servocontrol (21 to 37) comprises adjustment means (25) making it possible to adjust the value of said principal position reference (Ref).

**9.** The actuator according to one of claims 1 to 8, **characterized in that**, as the driving device (9, 10, 11) is of the type providing increasing driving energy with the duration of the application of an electric control signal, the servocontrol (21 to 37) is designed to adjust the control signal, from the correction signal, by pulse width modulation of this control signal.

**10.** The actuator according to claim 9, **characterized in that** the servocontrol (21 to 37) comprises means making it possible to adjust the total duration of the application of the control signal independently of the correction signal (S5).

**11.** The actuator according to one of claims 1 to 10, **characterized in that** the servocontrol (21 to 37) is implemented by an electronic circuit formed by exclusively similar components.

**12.** The actuator according to one of claims 1 to 11, **characterized in that** it comprises at least one moving element (7, 9) guided in reciprocating translation motion relative to the rack (20).

**13.** The actuator according to one of claims 1 to 12, **characterized in that** it comprises at least one moving element guided in reciprocating rotational motion relative to the rack (20).

**14.** The actuator according to one of claims 1 to 13, **characterized in that** the driving device (9, 10, 11) is of the electromagnetic type with variable reluctance.

**15.** The actuator according to one of claims 1 to 14, **characterized in that** it is adapted so that the moving element (7, 9) has a displacement path of between 0.1 mm and 10 mm and may be driven at a frequency of between 0 and 1000 Hertz.

EP 2 156 548 B1

Fig .1

14

Fig 2

Fig 3

S3= S1 ⊕ S2

S4=Kpp S3−Kpm S2

$$S5(t)= \int Ki.S4(t)dt$$

Ref

Niv_Min

Niv_Max

C

38

S1

S2

S3

S4

S5

t

EP 2 156 548 B1

Fig 4

**RÉFÉRENCES CITÉES DANS LA DESCRIPTION**

**Documents brevets cités dans la description**

- EP 1250526 A